# EUROPEAN PATENT APPLICATION

(11) **EP 3 816 792 A1**
(43) Date of publication of application: **05.05.2021**
(21) Application number: 19815106.0
(22) Date of filing: 29.05.2019
(51) Int. Cl.: G06F 8/30

(54) **CONTROL SYSTEM, METHOD FOR CONTROLLING CONTROL SYSTEM, AND PROGRAM FOR CONTROL SYSTEM**

(30) Priority: 06.06.2018 JP 2018108920
(71) Applicant: OMRON Corporation, Shiokoji-dori, Shimogyo-ku, Kyoto-shi Kyoto 600-8530 (JP)
(72) Inventor: SUZUKI, Yuji, Kyoto-shi, Kyoto 600-8530 (JP); MARUNO, Ryota, Kyoto-shi, Kyoto 600-8530 (JP)
(74) Representative: HGF
(86) International application number: PCT/JP2019/021212
(87) International publication number: WO 2019/235312

(57) **Abstract**

A control system including a control device and a development supporting device for developing a plurality of programming languages executed in the control device, wherein the development supporting device includes an input unit that inputs source codes of the plurality of different programming languages, a mapping information producing unit that performs mapping of shared variables selected in the source codes, respectively, and that produces shared variable mapping information, and a transmit unit that transmits source codes and shared variable mapping information to the control device, wherein the control device includes a program executing unit that executes programs described by source codes, and a shared variable processing unit that processes each of mapped shared variables as common shared variables based on shared variable mapping information.

## Description

### TECHNICAL FIELD

The present disclosure relates to a control system having a development support device for developing a plurality of different programming languages executed in a control device, and the control device, a method of controlling a control system, and a computer program for a control system.

### BACKGROUND

In a system for controlling a robot, a computer program used for robot control is written in a V+ language, for example, while a computer program used for sequence control is written in one or plurality of languages (hereinafter called "IEC language(s)") described in accordance with the international standard IEC31131-3 specified by International Electrotechnical Commission (IEC) .

In order to build an application for a robot by using these programs, it is necessary to execute an interlocking process for synchronizing the both programs by exchanging data each other, or to share data, which is not able to obtain only in one of the languages, with the other language.

In the prior art as the patent document No. 1, a processor executing a program used for robot control is connected with a processor used for sequence control by busses using a common memory, so that data is exchanged between the both programs.

This kind of data exchanging is performed by defining shared variables each having the same name in the both programs.

### CITATION LIST

### PATENT LITERATURE

Patent Literature 1: Japanese Unexamined Patent Application Publication No. 7-72920.

### SUMMARY OF THE INVENTION

### TECHNICAL PROBLEM

However, there are restrictions on the name of the shared variables, such as the limitation of the number of the characters, character types usable for the shared variables, etc., depending on a program language. Furthermore, the programs using the both languages are created in separate displays, usually, by separate programmers. Therefore, if the same names are used for the shared variables defined as interfaces between the both programs, only the names of the shared variables, which satisfy restrictions for the names in all of the program languages, can be used. As a result, that imposes constraint on users.

Moreover, it is impossible to reuse program resources created in the past with the way of using the same names for the shared variables.

The objects of the present invention is to provide a control system, a method for the control system, and a program for the control system, in which the names of shared variables can be given freely, and the program resources created in the past can be reused, without giving the same names to the shared variables defined between different programs.

### SOLUTION TO PROBLEM

To solve the above-described problem, a control system according to this disclosure including a control device; and a development supporting device for developing a plurality of different programming languages executed in the control device, wherein the development supporting device includes: an input unit configured to input source codes of the plurality of different programming languages; a mapping information producing unit configured to perform mapping of shared variables selected in the source codes, respectively, to produce shared variable mapping information; and a transmit unit configured to transmit the source codes and the shared variable mapping information to the control device, wherein the control device includes: a program executing unit configured to execute programs described by the source codes; and a shared variable processing unit configured to process each of mapped shared variables as common shared variables on the basis of the shared variable mapping information.

In the above-described control system, the source codes in the plurality of different programming languages are input to the development supporting device by the input unit. In each of the programming languages, a shared variable sharing a memory is defined separately. These shared variables can be selected by a user, for example. The selected shared variables are subjected to a mapping process by the mapping information producing unit, so that the shared variable mapping information is produced. The produced shared variable mapping information is transmitted with the source codes to the control device by the transmit unit.

In the control device, the programs described in received source codes are executed by the program executing unit. The received shared variable mapping information is referred to by the shared variable processing unit. The mapped shared variables are processed as common shared variables.

According to the above-described control system, even if shared variables having different names are defined between different programs, these shared variables are subjected to the mapping process in the shared variable mapping information. Therefore, the shared variables are used as common shared variables in each of the programs. According to the control system, it is possible to give names to shared variables freely in each of the programs without giving the same name to shared variables, so that it is possible to eliminate restriction when giving names to shared variables. Furthermore, by performing the mapping process using the shared variable mapping information, it is possible to process variables described in program resources in the past as shared variables, so that it is possible to reuse the program resources in the past effectively.

In the control system of an embodiment, the shared variable processing unit may copy data between the mapped shared variables, or use the same reference address for the mapped shared variables.

In this control system of the embodiment, even if the mapped shared variables have different names respectively, data is copied between the shared variables, or the same reference address for the mapped shared variables is used. Therefore, data sharing is performed by the shared variables between the different programs.

According to the control system of the embodiment, it is possible to give names to shared variables freely in each of the programs without giving the same name to shared variables, so that it is possible to eliminate restriction when giving names to shared variables. Furthermore, by performing the mapping process using the shared variable mapping information, it is possible to process variables described in program resources in the past as shared variables, so that it is possible to reuse the program resources in the past effectively.

In the control system for another embodiment, the source codes input by the input unit may include at least a source code described in a compiled language and a source code described in an interpreter language.

In this control system of the embodiment, not only the source code described in the compiled language, but also the source code described in the interpreter language is input. in the interpreter language, it is impossible to determine whether or not an error about variables will occur without interpreting the source code. However, in the control system of the embodiment, since the mapping for the selected shared variables is performed on the basis of the shared variable mapping information in the stage of the source code, it can prevent the occurrence of the error relating to the shared variables.

According to the control system, it is possible to give names to shared variables freely in the source code described in the compiled language and the source code described in the interpreter language without giving the same name to shared variables, so that it is possible to eliminate restriction when giving names to shared variables. Furthermore, by performing the mapping process using the shared variable mapping information, it is possible to process variables described in program resources in the past including the complied language and the interpreter language as shared variables, so that it is possible to reuse the program resources in the past effectively.

In the control system of the other embodiment, the development supporting device may include a shared variable reference producing unit that indicates sections in which the shared variables are referred to in the source codes described in the plurality of different programming languages on the shared variable mapping information.

In the control system of the embodiment, the shared variable mapping information is referred to even when the shared variable reference indicating the sections in which the shared variable variables are referred to is produced by the shared variable reference producing unit.

In the control system, even in the names of the shared variables are different, the sections in which the shared variables are referred to it confirmed on the basis of the shared variable reference.

According to the control system, it is possible to find the leakage of the implementation of a shared variable defined between the different programs and the mistake in the name of the shared variable, appropriately, before executing the programs.

To solve the above-described problem, a control method for a control system according to this disclosure includes a control device; and a development supporting device for developing a plurality of different programming languages executed in the control device, wherein the controlling method including, in the development supporting device, inputting source codes of the plurality of different programming languages; performing mapping of shared variables selected in the source codes, respectively; producing shared variable mapping information; and transmitting the source codes and the shared variable mapping information to the control device, wherein in the development supporting device, executing programs described by the source codes; and processing each of mapped shared variables as common shared variables on the basis of the shared variable mapping information.

According to the control method for a control system of this disclosure, even if shared variables having different names are defined between different programs, these shared variables are subjected to the mapping process in the shared variable mapping information. Therefore, the shared variables are used as common shared variables in each of the programs. According to the control system, it is possible to give names to shared variables freely in each of the programs without giving the same name to shared variables, so that it is possible to eliminate restriction when giving names to shared variables. Furthermore, by performing the mapping process using the shared variable mapping information, it is possible to process variables described in program resources in the past as shared variables, so that it is possible to reuse the program resources in the past effectively.

To solve the above-described problem, a program for a control system according to this disclosure, is a program for causing a computer to execute the above-mentioned control method for the control system.

By causing a computer to execute the program according to this disclosure, it is possible to implement the above-mentioned control method for the control system.

### ADVANTAGEOUS EFFECTS OF INVENTION

As described above clearly, according to the control system, the control method for the control system, and the program for the control system of this disclosure, it is unnecessary to give the same names to the shared variables when using the shared variables in a plurality of programming languages. As a result, the rule for giving a name to a shared variable will be relaxed, so that it is possible to improve freedom in the naming of the shared variable. Furthermore, it is possible to use the shared variable without modifying the program which has already created, so that it is possible to reuse program resources effectively.

### BRIEF DESCRIPTION OF DRAWINGS

Fig. 1 is a schematic block diagram for illustrating the configuration of a robot control system 100 according to the first embodiment;
Fig. 2 is a diagram showing the configuration of the hardware of a development supporting device;
Fig. 3 is a diagram showing the configuration of the hardware of a control device;
Fig. 4 is a functional block diagram of the development supporting device;
Fig. 5 is a functional block diagram of the control device;
Fig. 6 is a diagram showing a display screen displayed in a display device of the development supporting device;
Fig. 7 is a diagram explaining the operations of an arm type robot and an end effector;
Fig. 8 is a flowchart of a program written in a V+ language and a program written in an IEC language for achieving the operations shown in Fig.6;
Fig. 9 is a diagram showing examples of the program written in the V+ language and the program written in the IEC language for achieving the operations shown in Fig.6;
Fig. 10 is a flowchart showing a mapping process for shared variables;
Fig. 11 is an example of a display on a display screen of a display device when the mapping processing for the shared variables is performed;
Fig. 12 is a flowchart showing a checking process for shared variables;
Fig. 13 is a diagram showing a display screen displayed in a display device of the development supporting device according to the second embodiment; and
Fig. 14 is a diagram showing an example of a cross reference display screen.

### DETAILED DESCRIPTION OF PREFERRED EMBODIMENT

In the following, embodiments will be described in detail with reference to the drawings as appropriate.

### (First Embodiment)

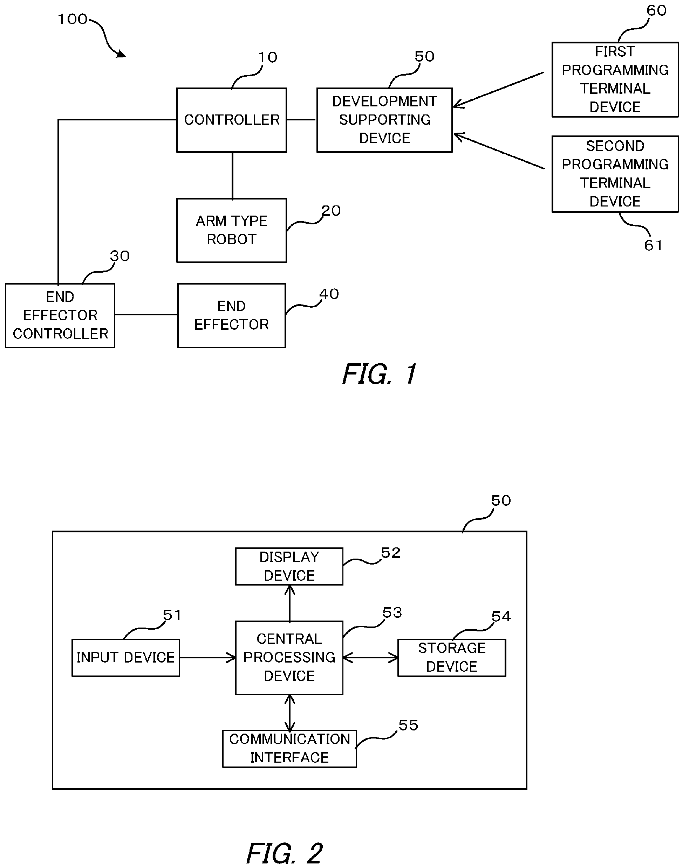

Fig. 1 is a schematic block diagram for illustrating the configuration of a robot control system 100 according to the first embodiment. As shown in Fig. 1, the robot control system 100 includes a controller (a control device) 10, an arm type robot 20, an end effector controller 30, an end effector 40, and a development supporting device 50.

The controller 10 is a Programmable Logic Controller (PLC) or an industrial computer, for example. It executes a robot control program for controlling the operation of the arm type robot 20, and a sequence control program for controlling the operation of the end effector 40, to output a control signal.

The arm type robot 20 is vertically articulated robot having six axes, for example. It is connected to the controller 10 in a communicable manner. The arm type robot 20 has a power source, such as a servo motor, etc. The servo motor is driven by a control signal output from the controller 10 on the basis of the robot control program, so that it actuates each of joint axes.

The end effector controller 30 is connected to the controller 10 in a communicable manner. The end effector controller 30 drives a servo motor in the end effector 40 by a control signal output from the controller 10 on the basis of the sequence control program.

The end effector 40 is attached to the end part of the arm type robot 20, and has a mechanism for gripping a component, for example. The end effector 40 is connected to the end effector controller 30 in a communicable manner. A servo motor in the end effector 40 is driven by a control signal output from the end effector controller 30, so that the operation of gripping the component is executed.

The develop supporting device 50 is a computer, such a personal computer, etc., and is connected to the controller 10 in a communicable manner. The develop supporting device 50 has a function of uploading a robot control program and a sequence control program, which is executed in the controller 10, to the controller 10; a function of debugging those programs; and a function of simulating those programs.

In this embodiment, the develop supporting device 50 is connected to a first programming terminal device 60 and a second programming terminal device 61 in a communicable manner. The robot control program is created in the first programming terminal device 60, such as a personal computer, etc., to be downloaded to the development supporting device 50. The sequence control program is created in the second programming terminal device 61, such as a personal computer, etc., to be downloaded to the development supporting device 50. The robot control program and the sequence control program might be created in the development supporting device 50.

The development supporting device 50 achieves the above-mentioned functions by launching software installed in the computer in advance. The software includes a program according to the present invention. The development supporting device 50 has an input device 51, a display device 52, a central processing device 53, a storage device 54, and a communication interface 55 as shown in Fig. 2. The input device 51 is comprised of a keyboard and a pointing device, for example. The display device 52 is comprised of a display, for example. The central processing device 53 is comprised of a CPU, for example. The storage device 54 has a nonvolatile storage device and a volatile storage device. The nonvolatile storage device stores the robot control program, the sequence control program, and shared variable matching information, etc. The volatile storage device is used as a working memory when the central processing device 53 is performed. The communication interface 55 is an interface for a serial communication line, such as an RS232C, etc., for example, and performs a communication with the controller 10. The communication interface 55 might be an interface for another communication line.

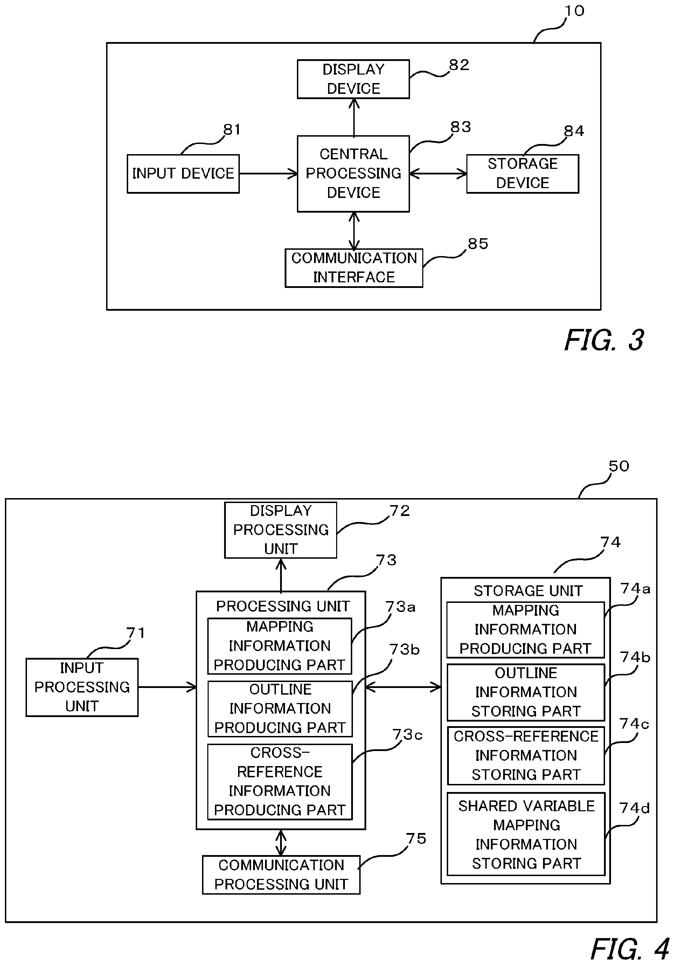

The controller 10 has the same hardware configuration as that of the development supporting device 50. The controller 10 achieves the above-mentioned functions by launching software installed in the computer in advance. The software includes a program according to the present invention. The controller 10 has an input device 81, a display device 82, a central processing device 83, a storage device 84, and a communication interface 85 as shown in Fig.3. The input device 81 is comprised of a keyboard and a pointing device, for example. The display device 82 is comprised of a display, for example. The central processing device 83 is comprised of a CPU, for example. The storage device 84 has a nonvolatile storage device and a volatile storage device. The nonvolatile storage device stores the robot control program, the sequence control program, and shared variable matching information, etc. The volatile storage device is used as a working memory when the central processing device 83 is performed. The communication interface 85 is an interface for a serial communication line, such as an RS232C, etc., for example, and performs a communication with the development supporting device 50. The communication interface 85 might be an interface for another communication line.

Fig. 4 is a functional block diagram of the development supporting device 50. The development supporting device 50 functions as an input processing unit 71, a display processing unit 72, a processing unit 73, a storage unit 74, and a communication processing unit 75. The input processing unit 71 processes input from the input device 51. The display processing unit 72 creates display data to output on the display device 52. The processing unit 73 includes a mapping information producing part 73a, an outline information producing part 73b, and a cross-reference information producing part 73c. The details of these functions of the processing unit 73 will be described later. The storage unit 74 includes a user program storing part 74a, an outline information storing part 74b, a cross-reference information storing part 74c, and a shared variable mapping information storing part 74d. The details of these functions of the storage unit 74 will be described later.

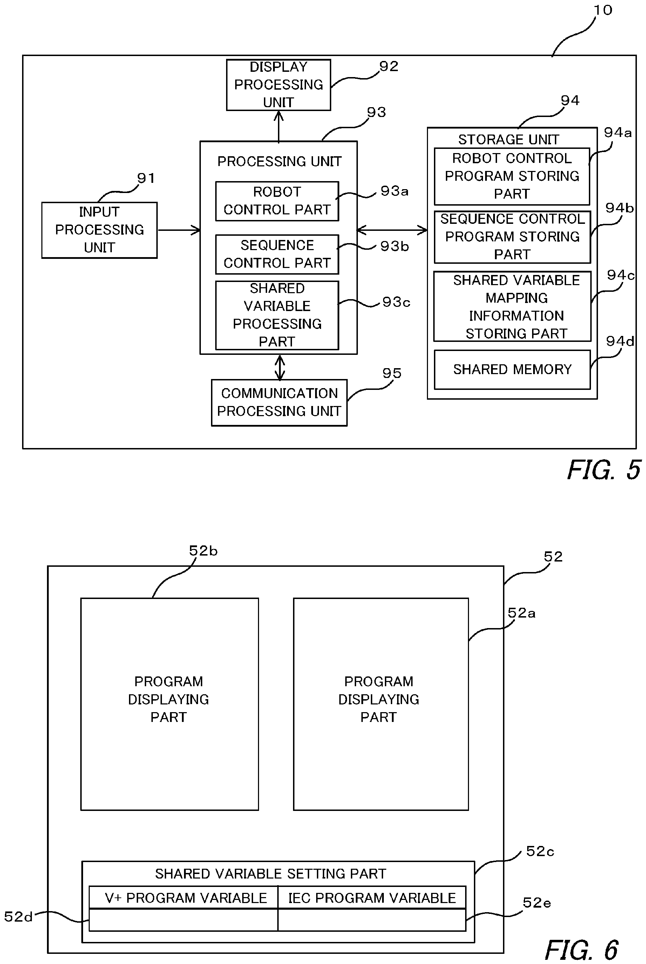

Fig. 5 is a functional block diagram of the control device 10. The control device 10 functions as an input processing unit 91, a display processing unit 92, a processing unit 93, a storage unit 94, and a communication processing unit 95. The input processing unit 91 processes input from the input device 81. The display processing unit 92 creates display data to output on the display device 82. The processing unit 93 includes a robot control part 93a, a sequence control part 93b, and a shared variable processing part 93c. The details of these functions of the processing unit 93 will be described later. The storage unit 94 includes a robot control program storing part 94a, a sequence control program storing part 94b, a shared variable mapping information storing part 94c, and a shared memory 94d. The details of these functions of the storage unit 94 will be described later.

Fig. 6 is a diagram showing a display screen displayed in the display device 52 of the development supporting device 50. As shown in Fig. 6, the display screen on the display device 52 includes program displaying parts 52a, 52b, and a shared variable setting part 52c. The program displaying parts 52a, 52b displays the source codes of a robot control program and a sequence control program, respectively.

The shared variable setting part 52c includes shared variable displaying fields 52d, 52e. In the shared variable displaying field 52d, shared variables selected from shared variables described in the source code of the V+ program are displayed. In the shared variable displaying field 52e, shared variables selected from shared variables described in the source code of the IEC program are displayed.

### (Shared variable mapping processing)

The mapping processing for shared variables in the present embodiment. In this embodiment, for example, a checking process in a program for moving the arm type robot to the position of a workpiece, grasping the workpiece by the end effector, and moving the arm type robot to another position in that state, will be described. In this embodiment, a V+ language is used for the robot control program. The sequence control program is a program written in an IEC language. In this embodiment, an ST language is used for the sequence program, for example.

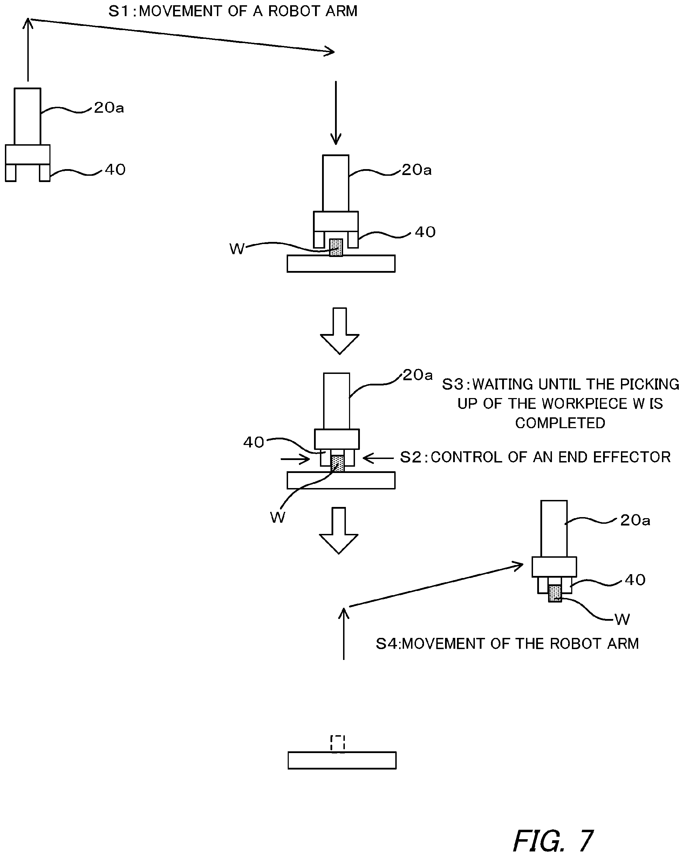

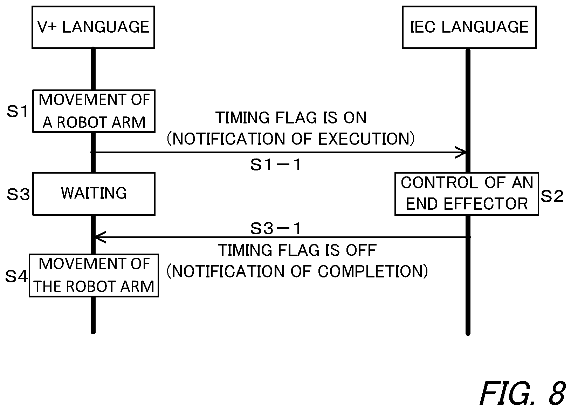

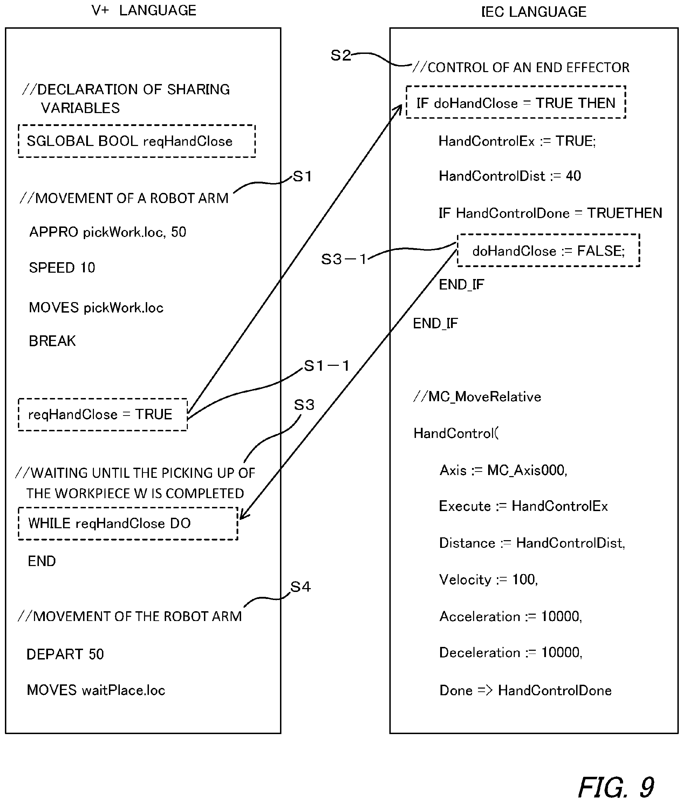

Fig. 7 is a diagram explaining the above-mentioned operations of the arm type robot and the end effector. Fig. 8 is a flowchart of a program written in a V+ language and a program written in an IEC language. Fig. 9 is a diagram showing source codes of the program written in the V+ language and the program written in the IEC language for achieving the above-mentioned operations.

In this example, as shown in Fig. 7, first, the arm 20a of the arm type robot 20 is moved close to a workpiece W (Fig.8:S1;a movement of a robot arm). Next, the end effector 40 is moved to pick up the workpiece W (Fig.8:S2;control of an end effector). In the meantime, the arm type robot 20 waits until the picking up of the workpiece W is completed (Fig.8:S3;waiting until the picking up of the workpiece W is completed). Then, when the picking up of the workpiece W is completed, the arm 20a of the arm type robot 20 is moved to another position (Fig.8:S4;movement of the robot arm).

The above-mentioned operation will be described in accordance with the flowchart in Fig. 8. As shown in Fig. 8, first, the program described in V+ language, which is a robot control program, moves the arm 20a of the arm type robot 20 to a predetermined position close to the workpiece W (S1). Next, when the movement of the arm 20a of the arm type robot 20 to the predetermined position is completed, the program turns on a timing flag by using a shared variable (S1-1). This shared variable is referred in the program described in the IEC language, so that the turning-on of the timing flag becomes a notification of executing of controlling for the end effector to the program described in the IEC language.

The program described in the IEC language starts the control of the end effector 40 when the timing flag is turned on, to pick up the workpiece W (S2). In the meantime, the program described in the V+ language waits (S3). The program described in the IEC language turns off the timing flag by using the shared variable when the picking-up of the workpiece W by the end effector 40 is completed (S3-1). The turning-off of the timing flag becomes a notification of the completion of controlling for the end effector 40 to the program described in the V+ language. The program described in the V+ language moves the arm 20a of the arm type robot 20 to another position when the timing flag is turned off (S4) .

In the example shown in Fig.9, "reqHandClose" is used as a shared variable in the program described in the V+ language, and "doHandClose" is used as a shared variable in the program described in the IEC language. In the program described in the V+ language, the syntax, "reqHandClose = TRUE" indicates that the timing flag is turned on. In the program described in the IEC language, the syntax, "IF doHandClose = TRUE THEN" indicates that the following programs are executed if the timing flag is on. In the program described in the IEC language, the syntax, "doHandClose := FALSE;" indicates that the timing flag is turned off. Furthermore, In the program described in the V+ language, the syntax, "WHILE reqHandClose DO" indicates that the timing flag is turned off to wait until the picking-up of the workpiece W is completed.

As described above, in the present embodiment, the operations of the arm type robot 20 and the end effector 40 are controlled by confirming the contents of the shared variable "reqHandClose" in the program described in the V+ language and of the shared variable "doHandClose" in the program described in the IEC language.

In the present embodiment, the usage of the shared variables having different names between different programs is available since a shared variable mapping information is created in the development supporting device 50 to refer the shared variable mapping information by the controller 10 when the program is executed.

The creation of the shared variable mapping information in the development supporting device 50 is performed after a source code A of the program described in the IEC language, which is a compiled language, is input from the first programming terminal device 60, or a source code B of the program described in the V+ language, which is an interpreter language, is input from the second programming terminal device 61.

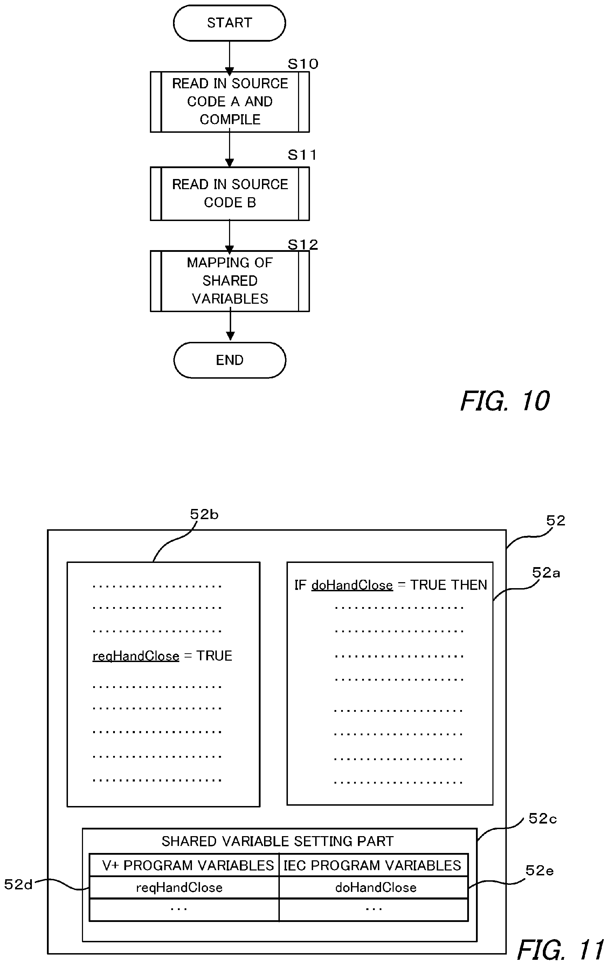

Fig. 10 is a flowchart showing a mapping process for shared variables. As shown in Fig. 10. the input processing unit 71 inputs the source code A of the program described in the IEC language, which a compiled language, from the first programming terminal device 60, to execute compilation (S10).

The input processing unit 71 inputs the source code B of the program described in V+ language, which is an interpreter language, from the second programming terminal device 61 (S11).

The mapping information producing part 73a executes mappings for the shared variable described in the source code A and the shared variable described in the source code B.

The mapping of the shared variable is performed while the source code A described in the IEC language and the source code B described in the V+ language are displayed on the program displaying parts 52a, 52b as shown in Fig. 11. Fig. 11 is an example of a display on a display screen of the display device 52 when the mapping processing for the shared variables is performed. The example shown in Fig. 11, the source code B of the program described in the V+ language is displayed on the program displaying part 52a. The source code A of the program described in the IEC language is displayed on the program displaying part 52b.

Variables are registered as shared variables by inputting variables in the shared variable displaying fields 52d, 52e of the shared variable setting part 52c, or drugging and dropping variables in the shared variable displaying fields 52d, 52e, in the state that the source coeds A, B are displayed on the program displaying parts 52a, 52b as described above. In the example shown in Fig. 11, the shared variable "reqHandClose" and the shared variable "doHandClose" are input in the shared variable displaying fields 52d, 52e, or drugged and dropped to the shared variable displaying fields 52d, 52e. The registered shared variable is changed in color for characters, or underlined, or changed in color for its background, to be distinguishable against other characters.

In the example shown in Fig. 11, the shared variable "reqHandClose" is displayed on the shared variable displaying field 52d, and the shared variable "doHandClose" is displayed on the shared variable displaying field 52e, to be registered. The shared variables which are displayed on the shared variable displaying fields 52d, 52e and registered is mapped by the mapping information producing part 73a, so that a shared variable mapping information, in which "reqHandClos" and "doHandClos" are mapped, is produced, for example. The produced shared variable mapping information is stored in the shared variable mapping information storing part 74d.

If there are a plurality of shared variables in a source code, and they are registered as mentioned above, the mapping is performed for the plurality of shared variables to produce the shared variable mapping information.

After producing the shared variable mapping information in the development supporting device 50 as described above, the processing unit 73 and the communication processing unit 75 functioned as a transmitting unit transmits an object code in which the source code A of the program described in the IEC language is compiled, the source code B of the program described in V+ language, and the shared variable mapping information, to the controller 10.

The checking process for the shared variables in the controller 10 will be described. In the controller 10, the processing unit 93 receives an object code of the program described in the IEC language, the source code B of the program described in the V+ language, and the shared variable mapping information, from the development supporting device 50 through the communication processing unit 95. The processing unit 93 stores an object code of the program described in the IEC language in the sequence control program storing part 94b, and stores the source code B of the program described in V+ language in the robot control program storing part 94a. The processing unit 93 stores the shared variable mapping information in the shared variable mapping storing part 94c.

When an executing process for programs is selected in the controller 10, the robot control part 93a functioned as a program execution unit executes the source code B of the program described in the V+ language while interpreting the source code B, and the sequence control part 93b also functioned as a program execution unit executes an object code of the program described in the IEC language.

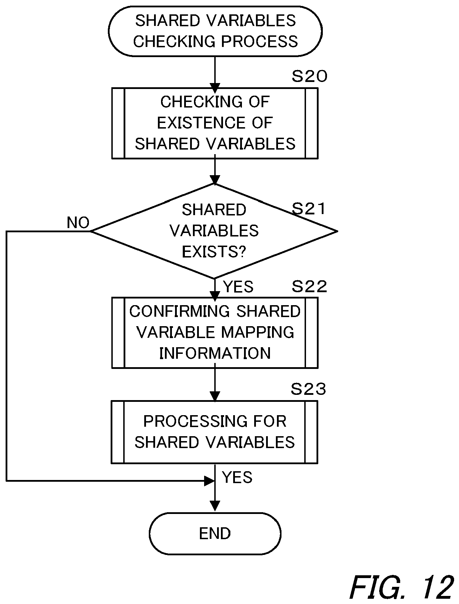

At that time, the robot control part 93a and the sequence control part 93b perform a process for checking whether or not the shared variable is included in programs. Fig. 12 is a flowchart showing a checking process for shared variables. This checking process for shared variables is performed repeatedly at every predetermined time. As shown in Fig. 12, the robot control part 93a and the sequence control part 93b check whether or not a shared variable is included in programs while executing the programs (S20). If the robot control part 93a and the sequence control part 93b determines that there is no shared variable in the programs (S21: NO), they finish this process. However, if the robot control part 93a and the sequence control part 93b determines that there are shared variables in the programs (S21:YES), they refer to the shared variable mapping information stored in the shared variable mapping information storing part 94c (S22). The shared variable processing part 93c process each of the mapped shared variables as common shared variables (S23).

The process for each of the mapped shared variables as common shared variables means that it copies data between the mapped shared variables, or uses the same reference address for the mapped shared variables. In the above example, if the robot control part 93a refers to the shared variable "reqHandClose" in the program described in the V+ language, the robot control part 93a confirms the shared variable mapping information stored in the shared variable mapping information storing part 94c. In the shared variable mapping information, the shared variable "doHandClose" is mapped to the shared variable "reqHandClose." Therefore, the robot control part 93a copies data of the shared variable "reqHandClose" to the shared variable "doHandClose", or copies the data of the shared variable "doHandClose" to the shared variable "reqHandClose." Alternatively, the robot control part 93a writes data in an address of the shared memory 94d which is set as a shared reference address for the shared variable "reqHandClose" and the shared variable "doHandClose", or read in data from the address.

If the sequence control part 93b refers to the shared variable "doHandClose" in the program described in the IEC language, the sequence control part 93b confirms the shared variable mapping information stored in the shared variable mapping information storing part 94c. In the shared variable mapping information, the shared variable "reqHandClose" is mapped to the shared variable "doHandClose." Therefore, the sequence control part 93b copies data of the shared variable "doHandClose" to the shared variable "reqHandClose", or copies the data of the shared variable "reqHandClose" to the shared variable "doHandClose." Alternatively, the sequence control part 93b writes data in an address of the shared memory 94d which is set as a shared reference address for the shared variable "doHandClose" and the shared variable "reqHandClose", or read in data from the address.

As described above, according to the present embodiment, even if shared variables having the different names between the different programs, such as the program described in the V+ language, the program described in the IEC language, are defined, it is possible to usage them as common shared variables between these programs by referring the shared variable mapping information. As a result, according to the system of the present embodiment, it is possible to give names to shared variables more freely in the different programs respectively, without giving the same name for the shared variables, so that it can eliminate restriction when giving names to shared variables.

Especially, in the interpreter language, such as the program described in the V+ language, it is impossible to determine whether or not an error about variables will occur without interpreting the source code. However, according to the present embodiment, since the mapping for the shared variables is performed in advance, it can prevent the occurrence of the error.

Furthermore, according to the present embodiment, by performing the mapping on the basis of the shared variable mapping information, it is possible to process variables described in program resources in the past as the shared variables, so that it is possible to reuse the program resources in the past effectively.

### (The second embodiment)

The second embodiment of the present disclosure will be described while referring to the attached drawings. In the first embodiment, the shared variable mapping information is produced in the development supporting device 50, and the shared mapping information is referred in the controller 10 when executing the programs. However, in the present embodiment, the shared variable mapping information is referred when producing a cross-reference.

In the present embodiment, the shared variable mapping information is produced in the same way as that of the first embodiment, and is stored in the shared variable mapping information storing unit 74d.

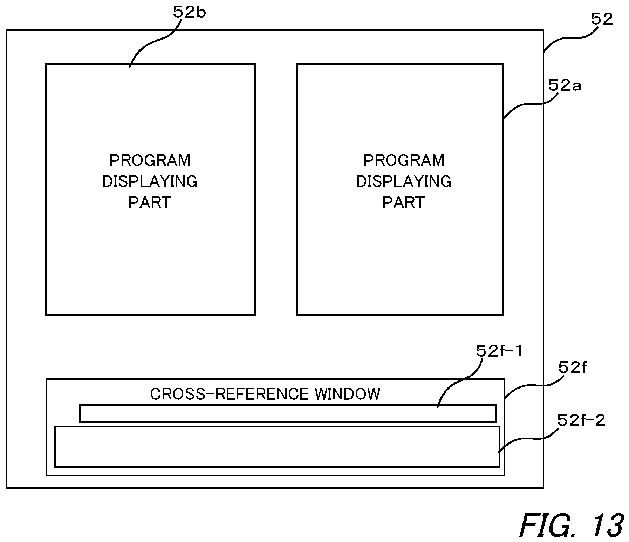

Fig. 13 is a diagram showing a display screen displayed in the display device 52 of the development supporting device 50 according to the present embodiment. In the present embodiment, as shown in Fig. 13, a cross-reference window 52f is displayed below the program displaying parts 52a, 52b.

The cross-reference window 52f has a reference object inputting field 52f-1 and a reference information displaying field 52f-2. By inputting an operand in the reference object inputting field 52f-1, or by selecting the shared variables on the V+ program or the IEC program, the operand is displayed on the reference object inputting field 52f-1, and a cross-reference information for a command having the same operand as that displayed on the reference object inputting field 52f-1 is displayed on the reference information displaying field 52f-2. By inputting the shared variables in the reference object inputting field 52f-1, a cross-reference information for commands using the shared variables is displayed on the reference information displaying field 52f-2.

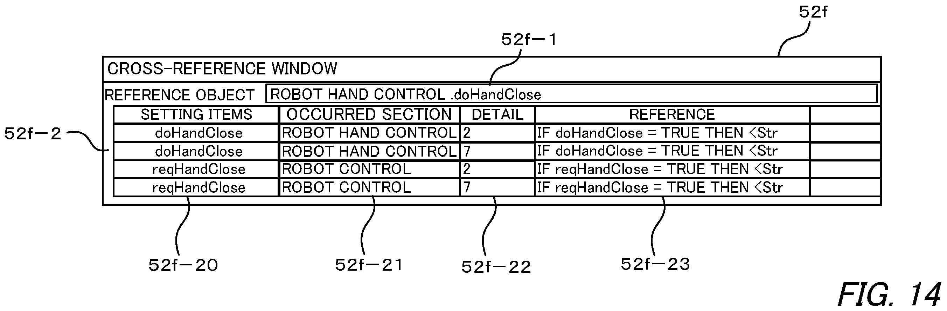

A display example of the cross-reference window 52f is shown in Fig. 14. As shown in Fig. 14, a cross-reference window 52f has the reference object inputting field 52f-1, and the reference information displaying field 52f-2. The reference information displaying field 52f-2 has a setting item displaying field 52f-20, a occurred section displaying field 52f-21, a detail information displaying filed 52f-22, and a reference displaying field 52f-23, etc.

In the reference object inputting field 52f-1, the name of the program in which a cross-reference is performed, and selected variables are displayed. The "robot hand control" indicated in Fig. 14 indicates the name of the program described in the IEC language. The "doHandClose" is the selected shared variable.

In the setting item displaying field 52f-20, variables subjected to the cross-reference is displayed. In Fig. 14, the shared variables "doHandClose" and "reqHandClose" are displayed. In the occurred section displaying field 52f-21, the name of the program in which variables displayed in a setting item are referred. In this example, "robot hand control" and "robot control" are displayed. The "robot control" indicates the name of the program described in the V+ language.

In the detail information displaying filed 52f-22, line numbers in the source code of the program, in which variables displayed in the setting item displaying field 52f-20 are referred, are displayed. In the reference displaying field 52f-23, the source code in the line numbers displayed in the detail information displaying filed 52f-22 is displayed.

In the present embodiment, when the process of the cross-reference starts, and shared variables are input in the occurred section displaying field 52f-21, the cross-reference information producing unit 73c refers to the shared variable mapping information to extract the mapped shared variables. For example, as shown in Fig. 14, if "doHandClose" is input in the generating section displaying field 52f-21, the cross-reference information producing unit 73c refers to the shared variable mapping information to extract "reqHandClose" mapped in "doHandClose."

The cross-reference information producing unit 73c executes a cross-reference process in the source code B of the program described in the V+ language and the source code A of the program described in the IEC language, for the shared variables input in the he reference object inputting field 52f-1, and the shared variables extracted from the shared variable mapping information. In the above-mentioned example, the cross-reference information producing unit 73c refers to the section, in which the shared variable "reqHandClose" is used, for the source code B of the program described in the V+ language, and stores the name of the program, the number of step, address, language, path, etc., in the cross-reference information storing unit 74c as the cross-reference information. The cross-reference information producing unit 73c refers to the section, in which the shared variable "doHandClose" is used, for the source code A of the program described in the IEC language, and stores the name of the program, the number of step, address, language, path, etc., in the cross-reference information storing unit 74c as the cross-reference information.

As the result of the above-mentioned process, in the cross-reference window 52f, as shown in Fig.14, not only the cross-reference information relating to the shared variable "doHandClose", but also the cross-reference information relating to the shared variable "reqHandClos" is displayed on the reference information displaying field 52f-2.

As described above, according to the present embodiment, even if the shared variables each having a different name are defined in different programs respectively, by just inputting the name of one shared variable, not only a section in which the one shared variable is referred, but also another section in which another shared variable mapped to the one shared variable is referred, is displayed on the cross-reference window 52f.

Therefore, a user can easily understand whether or not the shared variables are referred properly in a plurality of programs by seeing the contents displayed on the cross-reference window 52f. As a result, it is possible to debug programs smoothly.

As described above, according to the present embodiment, the error message indicating that the shared variable is not used in at least one of the program described in the IEC language and the program described in the V+ language, is displayed. As a result, it is possible to confirm the leakage of the implementation of a shared variable, the mistake in the name of a shared variable, the existence of a useless shared variable, etc. Thus, it is possible to debug programs smoothly.

As described above, according to the present embodiment, the error message indicating that the shared variable is not used in at least one of the program described in the IEC language and the program described in the V+ language, is displayed. Even in this case, by just selecting the shared variable in an outline information in one program, it is possible to display not only the section in which the shared variable is referred in the program, but also the section in which the shared variable is referred in another program on the cross-reference window 52f.

Therefore, a user can easily understand whether or not shared variables are referred properly in all of the programs by seeing the contents displayed on the cross-reference window 52f. As a result, it is possible to confirm the leakage of the implementation of a shared variable, the mistake in the name of a shared variable, the existence of a useless shared variable, etc. Thus, it is possible to debug programs smoothly.

The embodiments are described as the exemplification of the present invention. Therefore, the present invention is not limited to this and various modifications may be made without departing from the scope and spirit of the present invention.

### REFERENCE NUMBERS

- 10: CONTROLLER
- 50: DEVELOPMENT SUPPORTING DEVICE
- 71: INPUT PROCESSING UNIT
- 73a: MAPPING INFORMATION PRODUCTING UNIT
- 75: COMMUNICATION PROCESSING UNIT
- 93c: SHARED VARIABLE PROCESSING PART
- 100: ROBOT CONTROL SYSTEM

## Claims

1. A control system comprising a control device; and a development supporting device for developing a plurality of different programming languages executed in the control device,
wherein the development supporting device comprises:
an input unit configured to input source codes of the plurality of different programming languages;
a mapping information producing unit configured to perform mapping of shared variables selected in the source codes, respectively, to produce shared variable mapping information; and
a transmit unit configured to transmit the source codes and the shared variable mapping information to the control device,
wherein the control device comprises:
a program executing unit configured to execute programs described by the source codes; and
a shared variable processing unit configured to process each of mapped shared variables as common shared variables on the basis of the shared variable mapping information.

2. The control system according to claim 1, wherein
the shared variable processing unit copies data between the mapped shared variables, or uses the same reference address for the mapped shared variables.

3. The control system according to claim 1 or 2, wherein
the source codes input by the input unit comprises at least a source code described in a compiled language and a source code described in an interpreter language.

4. The control system according to any one of claims 1 to 3, wherein
the development supporting device comprises a shared variable reference producing unit that indicates sections in which the shared variables are referred to in the source codes described in the plurality of different programming languages on the shared variable mapping information.

5. A controlling method for a control system including a control device; and a development supporting device for developing a plurality of different programming languages executed in the control device, the controlling method comprising:
in the development supporting device,
inputting source codes of the plurality of different programming languages;
performing mapping of shared variables selected in the source codes, respectively;
producing shared variable mapping information; and transmitting the source codes and the shared variable mapping information to the control device,
in the development supporting device,
executing programs described by the source codes; and
processing each of mapped shared variables as common shared variables on the basis of the shared variable mapping information.

6. A program for a control system including a control device; and a development supporting device for developing a plurality of different programming languages executed in the control device, the program causing a computer to execute:
in the development supporting device,
inputting source codes of the plurality of different programming languages;
performing mapping of shared variables selected in the source codes, respectively;
producing shared variable mapping information; and
transmitting the source codes and the shared variable mapping information to the control device,
in the development supporting device,
executing programs described by the source codes; and
processing each of mapped shared variables as common shared variables on the basis of the shared variable mapping information.
